# EUROPEAN PATENT SPECIFICATION

(11) **EP 1 022 486 B1**
(45) Date of publication and mention of the grant of the patent: **17.03.2004**
(21) Application number: 00300330.8
(22) Date of filing: 18.01.2000
(51) Int. Cl.: F16G 13/04, B21L 9/02

(54) **Link plate for a silent chain**
Lasche für Zahnkette
Plaquette de maillon pour chaîne à dents

(30) Priority: 19.01.1999 JP 1047199
(43) Date of publication of application: 26.07.2000
(73) Proprietor: BorgWarner Morse TEC Japan K.K., Nabari City Mie-Prefecture 518-0495 (JP)
(72) Inventor: Matsuura, Kenichi, Nabari, Mie 518-0495 (JP); Tani, Tomoyuki, Nabari, Mie 518-0495 (JP); Okude, Yukio, Nabari, Mie 518-0495 (JP)
(74) Representative: Hedges, Martin Nicholas

(56) References cited:
- DE-A- 19 807 852
- US-A- 3 535 871
- US-A- 5 803 854

## Description

The present invention relates to a link plate for a silent chain, possessing a pair of toes and pin apertures.

Silent chains are generally constructed by overlaying in the transverse and longitudinal directions a plurality of link plates, each possessing a pair of toes and pin apertures, and connecting each such link plate in a freely pivoting manner by means of connecting pins inserted into the pin apertures.

Typical processes for producing the link plates in such silent chains are firstly to perforate bands of blanking material with a punch to form the pin apertures, and then to use another punch to blank the contour of the link plates.

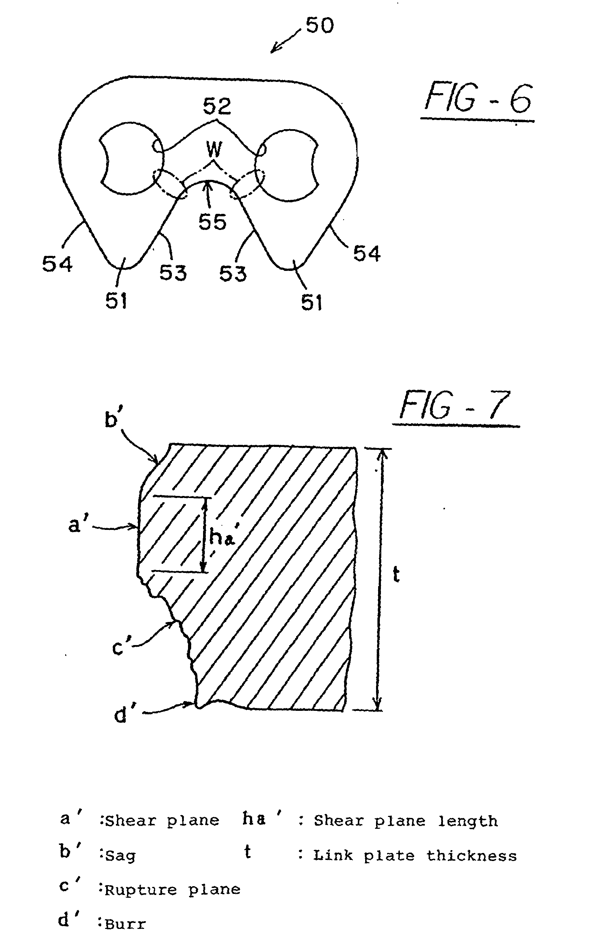

Fig. 6 shows one example of a link plate produced by press work of this type. In this drawing, link plate 50 possesses a pair of toes 51 and pin apertures 52. Each toe 51 is formed with an inside flank 53 and an outside flank 54, and the respective inside flanks 53 are joined by a crotch 55.

The current situation is that the length (shear plane length) ha' of the shear plane a' at the outer periphery of a conventional link plate 50 is no more than around 20% of the thickness t of the link plate, as shown in Fig. 7, and that rupture planes c' are formed in most parts of the outer periphery. Also, press work sometimes results in hairline cracks appearing on the interior of the link plate 50 near the outer periphery.

On the other hand, the area W between the crotch 55 and the pin apertures 52 in link plate 50 has the thinnest wall thickness and is the weakest area of said link plate 50. Hence, if hairline cracks occur in this area W the fatigue strength of link plate 50 will decline, and as a consequence this hairline crack may become a starting point for fatigue during operation, and fatigue fractures may occur.

DE-A-19807852, upon which the precharacterising clause of claim 1 is based, discloses a method of manufacture of link plates for a silent chain in which the pin aperture, crotch section and plate outer profile are all punched out during separate operations in order to produce a plate whose leg-side end surface has shear face tissue along at least 70% of the thickness of the plate.

The present invention overcomes these drawbacks by providing method of manufacturing a link plate for a silent chain which makes it possible to increase fatigue strength.

According, then, to one aspect of the present invention there is provided a method of manufacturing a link plate for a silent chain having a pair of apertures in which, in use, connecting pins are received; a pair of toes each being formed with an inside flank and an outside flank; and a crotch connecting said inside flank of one toe with said inside flank of the other toe, said method comprising the step of: perforating a blanking material to form said pair of pin apertures and a crotch hole; characterised by the further steps of machining said crotch hole to slightly increase the internal diameter thereof; and blanking the contour of the link plate from the blanking material such that the inner periphery of the crotch hole forms the crotch of the link.

The present invention further provides a link plate for a silent claim manufactured according to the method of any of the proceeding claims.

Note that "shaved" here refers to a method of work whereby a cutting tool, having an external diameter slightly greater than the internal diameter of the blanked part formed by blanking the blanking material with a punch, is used to cut the inner periphery of the blanked part of the blanking material, shaving off any rough surfaces or sags which arise on the inner periphery of the blanked part when blanking it with the punch, thereby improving the surface roughness of the inner periphery of the blanked part; and "burnished" refers to a method of work whereby a tool with, for example, a spherical form having an external diameter slightly greater than the internal diameter of the blanked part formed by blanking the blanking material with a punch, is pressed into the blanked part, squashing any rough surfaces which arise on the inner periphery of the blanked part when blanking it with the punch and hence improving the surface roughness of the inner periphery of the blanked part while simultaneously generating compressive stress on the inner periphery.

A link plate for a silent chain and a method of manufacture thereof in accordance with the invention has the advantage that, by machining the crotch hole prior to blanking said contour, in particular by shaving and/or burnishing, after blanking the rest of the contour of the link plate other than the crotch of the link plate, rupture planes are eliminated from the crotch of the link plate and a smooth surface is obtained, and it is also possible to prevent the generation of hairline cracks or local stress concentration and for residual stress to arise in the crotch. It is consequently possible to increase the fatigue strength of the link plate.

In an advantageous development of the invention, the crotch has a circular arc, making it possible to use a circular or semicircular punch when perforating the blanking material to form the crotch hole prior to shaving and/or burnishing, and it is consequently possible to reduce processing costs. Also, the inner surface of each of said pin apertures is preferably shaved and/or burnished prior to blanking the contour of said link plate, since this also eliminates rupture planes from the inner surface of the pin apertures of the link plate and a smooth surface is obtained, and it is also thereby possible to prevent the generation of hairline cracks or local stress concentration and to produce residual stress in the inner surface of the pin apertures. It is consequently possible to increase further the fatigue strength of the area between the pin apertures and the crotch, which is the weakest part of the link plate.

In order that the invention may be well understood, there will now be described some embodiments thereof, given by way of example, reference being made to the accompanying drawings, in which:
Figure 1 is a partial top view of a silent chain including a link plate according to one embodiment of the present invention;
Figure 2 is a partial front view of the silent chain of Figure 1;
Figure 3 is an enlarged view of the link plate of the invention;
Figure 4 is an illustration of one possible manufacturing processes for the link plate of Figure 3;
Figure 5 is an enlarged cross-sectional view of the crotch of the link plate of Figure 3;
Figure 6 is an enlarged view of a conventional link plate; and
Figure 7 is an enlarged cross-sectional view of the outer periphery of the conventional link plate of Figure 6.

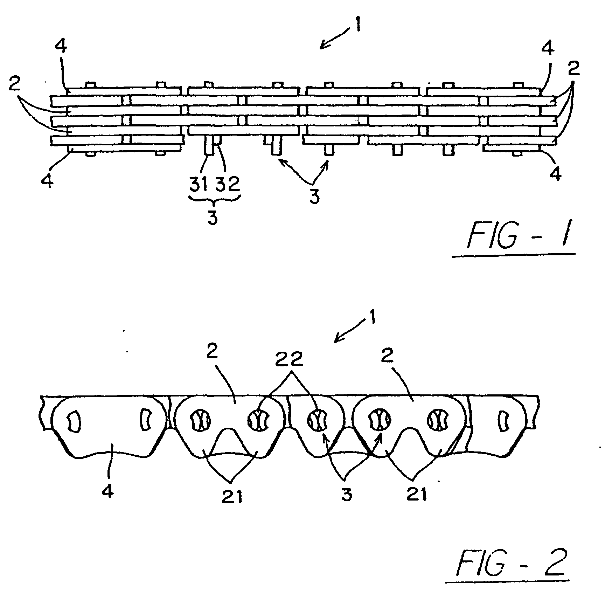

Referring first to Figures 1 and 2, there is shown a silent chain 1 formed by overlaying a plurality of link plates 2 in their thickness direction and length direction, and connecting them in a freely pivoting manner with connecting pins 3, and additionally, arranging a guide link 4 on the outermost side. The connecting pins 3 are formed of a long and short pair of joint pins 31 and rocker pins 32.

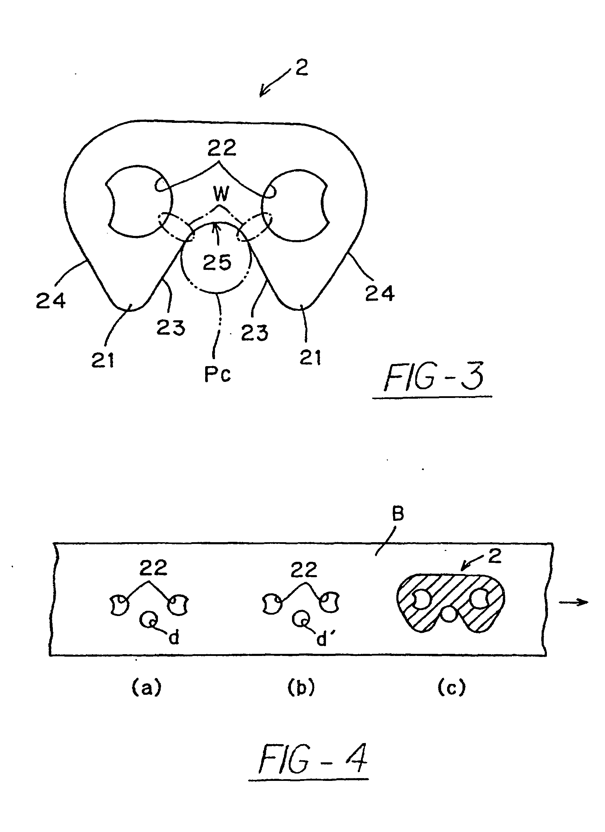

Each link plate 2, as shown in Fig. 3, has a pair of toes 21 and pin apertures 22, and each toe 21 is formed with an inside flank 23 and an outside flank 24. The respective inside flanks 23 are connected by means of the circular arc crotch 25.

One example of a manufacturing process for the link plate 2 formed in this way is shown in Fig. 4. As this drawing shows, while transporting a blanking material B in the direction of the arrow and moving it sequentially to the processing positions, firstly, in the initial stage (a), two types of punch (not shown in the drawing) are used to perforate the hole d which will form the circular arc surface of the crotch 25 and simultaneously the pair of pin apertures 22. Note that it would also be possible for hole d to be a semi-circular hole having a circular arc surface on the side at the top in the drawing. Making hole d a circular or semicircular hole in this way makes it possible to reduce processing costs.

Next, in the second stage (b), a shaving tool (not shown in the drawing) is used to shave the hole d and thereby to cut the inner periphery of hole d to form a hole d' with an internal diameter slightly larger than hole d.

Note that "shave" here refers to a method of work whereby a cutting tool, having an external diameter slightly greater than the internal diameter of the blanked part formed by blanking the blanking material with a punch, is used to cut the inner periphery of the blanked part of the blanking material, shave off any rough surfaces or sags which arose on the inner periphery of the blanked part when blanking it with the punch, and improve the surface roughness of the inner periphery of the blanked part.

Finally, in the third stage (c), a punch (not shown in the drawing) is used to blank the contour of the link plate 2. In this way, the link plate 2 is extracted from the blanking material B. Note that when the contour of link plate 2 is blanked, the inner periphery of the hole d', which will form the crotch 25 after the link plate is blanked, should form a continuous curve with the outer periphery of the inside flanks 23. As shown in Fig. 3, the crotch 25 in the link plate extracted from the blanking material B has been shaved with a shaving tool Pc in the second process (b) of Fig. 4.

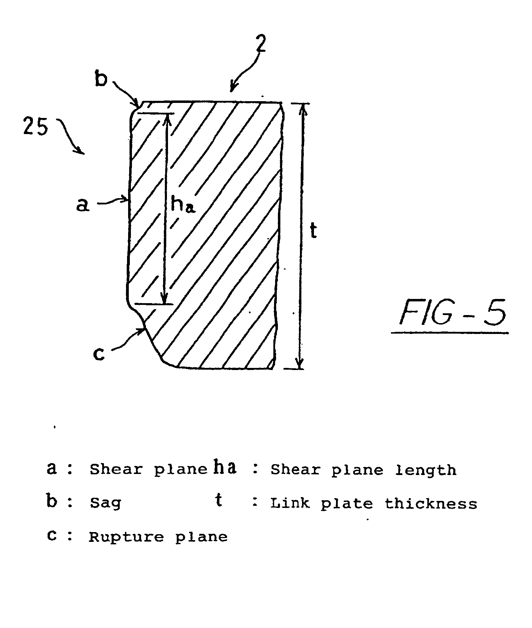

Fig. 5 is an enlarged cross-sectional drawing of the crotch 25. As shown in said drawing, 70% or more of the thickness t of the link plate 2 has been secured as the length (shear plane length) ha of the shear plane a of the crotch 25, as a result of the shaving. Through this, the hairline cracks which were generated on the inner periphery of the hole d when blanking the hole d with a punch have been removed, and consequently the fatigue strength of link plate 2 has been increased.

The aforementioned embodiment showed an example where hole d (Fig. 4) is shaved prior to blanking the contour of link plate 2, but application of the present invention is not restricted to this. In an alternative embodiment, burnishing may be used instead of or possibly in addition to shaving to finish the hole d. Note that "burnished" here refers to a method of work whereby a tool with for example a spherical form having an external diameter slightly greater than the internal diameter of the blanked part formed by blanking the blanking material with a punch, is pressed into the blanked part, squashes any rough surfaces which arose on the inner periphery of the blanked part when blanking it with the punch, and improves the surface roughness of the inner periphery of the blanked part while simultaneously generating compressive stress on the inner periphery.

If hole d is burnished, rupture planes are eliminated from the inner periphery of hole d, and additionally, residual stress arises in the inner periphery of hole d. In this way it is possible to increase the fatigue strength of link plate 2.

If both shaving and burnishing are applied to hole d, any hairline cracks which arise in the inner periphery of hole d when blanking hole d with a punch are certainly eliminated, and, additionally, residual stress arises in the inner periphery of hole d. Through this it is possible to increase further the fatigue strength of link plate 2.

The aforementioned embodiments illustrate examples where only the crotch 25 of the link plate 2 is machined. However, it is also possible to shave the pin apertures 22, whereby any hairline cracks which arise in the pin apertures 22 when perforating may be eliminated, so as to increase further the fatigue strength of the area W (Fig. 3) between the pin apertures 22 and the crotch 25, which is the weakest part of the link plate 2. It is also possible to burnish the pin apertures 22 either instead of or in addition to shaving, as described above in connection with the finishing of hole d. If the pin apertures 22 are burnished, rupture planes are eliminated from the inner periphery of the pin apertures 22, and additionally, residual stress arises in the inner periphery of the pin apertures 22. In this way, it is possible to increase further the fatigue strength of the area W (Fig. 3) between the pin apertures 22 and the crotch 25, which is the weakest part of the link plate 2.

If both shaving and burnishing are applied to the pin apertures 22, any hairline cracks which arose in the pin apertures 22 at the time of perforation are certainly eliminated, and additionally, residual stress arises in the inner periphery of the pin apertures 22. Through this, it is possible to increase further the fatigue strength of the area W (Fig. 3) between the pin apertures 22 and the crotch 25, which is the weakest part of the link plate 2.

Although the aforementioned embodiments are described in connection with link plates for a silent chain formed with so-called rocker joints as connecting pins, the present invention is also applicable to link plates of silent chains formed with round pins with circular cross-sections as connecting pins.

## Claims

1. A method of manufacturing a link plate (2) for a silent chain having a pair of apertures (22) in which, in use, connecting pins (3) are received; a pair of toes (21) each being formed with an inside flank (23) and an outside flank (24); and a crotch (25) connecting said inside flank (23) of one toe (21) with said inside flank (23) of the other toe (21), said method comprising the step of: perforating a blanking material (B) to form said pair of pin apertures (22) and a crotch hole (d); **characterised by** the further steps of machining said crotch hole (d) to slightly increase the internal diameter thereof; and blanking the contour of the link plate (2) from the blanking material (B) such that the inner periphery of the crotch hole (d) forms the crotch (25) of the link.

2. A method of manufacturing a link according to in claim 1, wherein said machining of said crotch hole (d) is effected by shaving.

3. A method of manufacturing a link plate according to claim 1 or claim 2, wherein said machining of said crotch hole (d) is effected by burnishing.

4. A method of manufacturing a link plate according to any of claims 1 to 3, including the further step of shaving said pin apertures (22) prior to blanking the contour of said link plate (2).

5. A method of manufacturing a link plate according to any of claims 1 to 4, including the further step of burnishing said pin apertures prior to blanking the contour of said link plate.

6. A link plate (2) for a silent claim (1) manufactured according to the method of any of the preceeding claims.

7. A link plate for a silent chain according to claim 6, wherein said crotch (25) has a circular arc.

## Patentansprüche

1. Verfahren zum Herstellen einer Lasche (2) für eine geräuscharme Kette, welche aufweist: zwei Löcher (22), von denen im Betrieb Verbindungsstifte (3) aufgenommen werden; zwei Zähne (21), die jeweils mit einer Innenflanke (23) und einer Außenflanke (24) versehen sind, und eine Zwischenfläche (25), die die Innenflanke (23) eines Zahns (21) mit der Innenflanke (23) des anderen Zahns (21) verbindet, wobei das Verfahren den folgenden Schritt aufweist: Perforieren eines Ausgangsmaterials (B), um die beiden Stiftlöcher (22) und ein Zwischenflächenloch (d) zu bilden; **gekennzeichnet durch** die folgenden weiteren Schritte: maschinelle Bearbeitung des Zwischenflächenloches (d), um dessen Innendurchmesser geringfügig zu vergrößern; und Freilegen der Kontur der Lasche (2) aus dem Ausgangsmaterial (B) in der Weise, dass der Innenumfang des Zwischenflächenlochs (d) die Zwischenfläche (25) der Lasche bildet.

2. Verfahren zum Herstellen einer Lasche nach Anspruch 1, bei dem die maschinelle Bearbeitung des Zwischenflächenloches (d) durch Schaben erfolgt.

3. Verfahren zum Herstellen einer Lasche nach Anspruch 1 oder 2, bei dem die maschinelle Bearbeitung des Zwischenflächenloches (d) durch Polieren erfolgt.

4. Verfahren zum Herstellen einer Lasche nach einem der Ansprüche 1 bis 3, welches den folgenden weiteren Schritt umfasst: Schaben der Stiftlöcher (22) vor dem Freilegen der Kontur der Lasche (2).

5. Verfahren zum Herstellen einer Lasche nach einem der Ansprüche 1 bis 4, das den folgenden weiteren Schritt umfasst: Polieren der Stiftlöcher vor dem Freilegen der Kontur der Lasche.

6. Lasche (2) für eine geräuscharme Kette ( 1 ), die mit dem Verfahren einer der vorhergehenden Ansprüche hergestellt wurde.

7. Lasche für eine geräuscharme Kette nach Anspruch 6, bei der die Zwischenfläche (25) einen Kreisbogen hat.

## Revendications

1. Un procédé de fabrication d'une plaquette de maillon (2) pour chaîne à dents ayant une paire d'ouvertures (22) qui, en cours de fonctionnement, reçoivent des axes de connexion (3), une paire de dents (21) formées chacune avec un flanc intérieur (23) et un flanc extérieur (24) ; et une fourche (25) reliant ledit flanc intérieur (23) d'une dent (21) audit flanc intérieur (23) de l'autre dent (21), ledit procédé comprenant l'étape consistant à : perforer un matériau de découpage au poinçon (B) afin de former ladite paire d'ouvertures d'axes (22) et un trou de fourche (d) ; **caractérisé par** les étapes supplémentaires consistant à usiner ledit trou de fourche (d) afin d'augmenter légèrement son diamètre intérieur ; et à découper au poinçon le contour de la plaquette de maillon (2) à partir du matériau de découpage (B) de sorte que la périphérie intérieure du trou de fourche (d) forme la fourche (25) de la plaquette.

2. Un procédé de fabrication d'une plaquette selon la revendication 1, dans lequel ledit usinage dudit trou de fourche (d) est réalisé par rasage.

3. Un procédé de fabrication d'une plaquette de maillon selon la revendication 1 ou la revendication 2, dans lequel ledit usinage dudit trou de fourche (d) est réalisé par brunissage.

4. Un procédé de fabrication d'une plaquette de maillon selon l'une quelconque des revendications 1 à 3, comportant l'étape supplémentaire consistant à raser lesdites ouvertures d'axes (22) avant le découpage au poinçon du contour de ladite plaquette de maillon (2).

5. Un procédé de fabrication d'une plaquette de maillon selon l'une quelconque des revendications 1 à 4, comportant l'étape supplémentaire consistant à brunir lesdites ouvertures d'axes avant le découpage au poinçon du contour de ladite plaquette de maillon.

6. Une plaquette de maillon (2) pour chaîne à dents (1) fabriquée suivant le procédé selon l'une quelconque des revendications précédentes.

7. Une plaquette de maillon'pour chaîne à dents selon la revendication 6, dans laquelle ladite fourche (25) a un arc circulaire.
